(19) Europäisches Patentamt
European Patent Office
Office européen des brevets

(11) **EP 4 606 156 B1**

(12) **EUROPEAN PATENT SPECIFICATION**

(45) Date of publication and mention of the grant of the patent:
**08.07.2026   Bulletin 2026/28**

(21) Application number: **22808890.2**

(22) Date of filing: **21.10.2022**

(51) International Patent Classification (IPC):
*H04W 52/28* (2009.01)    *H04W 88/08* (2009.01)
*H04W 52/36* (2009.01)

(52) Cooperative Patent Classification (CPC):
**H04W 52/281; H04W 52/367**

(86) International application number:
**PCT/SE2022/050963**

(87) International publication number:
**WO 2024/085792 (25.04.2024 Gazette 2024/17)**

(54) **RADIO POWER SCALING OF A SIGNAL HAVING A HIGH-PRIORITY PART AND A LOW-PRIORITY PART**

FUNKLEISTUNGSSKALIERUNG EINES SIGNALS MIT EINEM TEIL HOHER PRIORITÄT UND EINEM TEIL MIT NIEDRIGER PRIORITÄT

MISE À L'ÉCHELLE DE PUISSANCE RADIO D'UN SIGNAL AYANT UNE PARTIE À PRIORITÉ ÉLEVÉE ET UNE PARTIE À FAIBLE PRIORITÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**27.08.2025   Bulletin 2025/35**

(73) Proprietor: **Telefonaktiebolaget LM Ericsson (publ)**
**164 83 Stockholm (SE)**

(72) Inventors:
• **LARSSON, Erik**
**753 31 UPPSALA (SE)**
• **ASTELY, David**
**168 56 BROMMA (SE)**
• **WERNER, Karl**
**141 72 SEGELTORP (SE)**

(74) Representative: **Ericsson Patent Development Torshamnsgatan 21-23 164 80 Stockholm (SE)**

(56) References cited:
**US-A1- 2022 095 160**

**Description**

**TECHNICAL FIELD**

Embodiments presented herein relate to methods, a baseband unit, a radio unit, computer programs, and a computer program product for radio power scaling of a signal.

**BACKGROUND**

Mobile networks are becoming increasingly more complex with several mobile network operators employing different radio access technologies on a diverse set of frequency bands. Further, the size, weight, and cost of the radio unit should be kept as small as possible without compromising on key performance indicators (KPIs). One approach is therefore to develop radio units capable of multiband operation, or even wideband operation, where one radio unit and antenna system can handle operation at several frequency bands. Further, the output power of the radio unit is a key dimensioning factor in terms of size and weight of the radio unit; more output power requires more cooling which leads to larger size and weight. By employing power pooling, that is, efficiently using the total power in a pooled manner over several carriers (and/or sectors) in a radio unit during multiband operation, the total output power can be reduced without impacting important KPIs, such as network coverage.

One way to achieve power pooling benefits is radio power overbooking. In general terms, radio power overbooking means that the carriers are configured with in total more power than what the radio unit is capable of transmitting. As an introductory illustrative example, consider a radio unit capable of multiband operation and with a maximum total output power of max 60 W. Assume that the radio unit is configured with two carriers, where each carrier can have a maximum output power of 40 W and a bandwidth of 20 MHz. This means that the carriers are typically configured with a power spectral density (PSD) of 2 W/MHz. Evidently, 40 + 40 > 60 [W], and hence if both carriers are scheduled to use more than 30 MHz (30 MHz times 2 W/MHz = 60 W), then the PSD needs to be scaled down. However, if the total utilization of both carriers is low enough (i.e., less than 30 MHz), then the PSD target of 2 W/MHz can be kept.

Radio power overbooking is typically transparent to processing in the digital baseband unit, meaning that baseband operations, such as scheduling, will assume always having access to the configured power of the radio unit (i.e., 40 W per each 20 MHz carrier, or 2 W/MHz, in the example above). It is then up to the radio unit to ensure that the total radio capability (60 W in the example above) is never exceeded. The radio unit achieves this by scaling down the power of its carriers whenever the maximum capability of the radio unit is exceeded.

To support the operation of a radio access network, different physical layer signals and channels (i.e., signals and channels transmitted at protocol layer 1) that carry different types of information, including data, control and signaling have been defined. The importance, or sensitivity, of different channels and signals might differ. For example, best-effort data (carried in downlink on a data channel, such as the physical downlink shared channel, PDSCH) is subject to both lower- and higher-layer retransmissions (such as hybrid automatic repeat request (HARQ), radio resource control (RRC), transport control protocol (TCP)) and is therefore rather robust, while cell-defining signals such as synchronization signal block (SSB), where the SSB comprises primary synchronization signals (PSS) and secondary synchronization signals (SSS) and broadcast information, as transmitted on a physical broadcast channel (PBCH) and demodulation reference signals (DMRS)) are essential for a user equipment to be able to connect to the network and for the network to perform mobility and traffic handling. In fact, the signal quality of the SSB is typically used to determine whether a user equipment can connect to a cell, and furthermore to which cell the user equipment preferably should be connected to. The transmit power of the SSB is thus important for coverage, mobility handling, and traffic management. For example, the network may combine measurements on the SSB reflecting the radio propagation quality from different cells and the traffic load of different cells when performing traffic management. The dimensions of the PSD of the SSB are often designed to match the existing site grid.

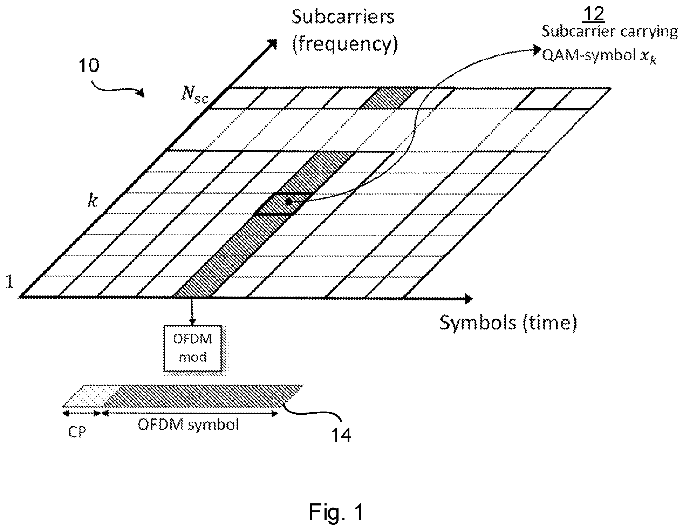

Finally, considering the telecommunication standards Long Term Evolution (LTE) and New Radio (NR) as examples, different physical channels and signals, such as SSB and PDSCH, are mapped to a time-frequency resource grid, where different channels/signals can be time and/or frequency multiplexed. In **Fig. 1** is illustrated an example time-frequency resource grid 10 with $N_{SC}$ number of subcarriers, where each subcarrier in each symbol carries a quadrature amplitude modulation (QAM) symbol $x_k$ 12 containing information. All subcarriers within a symbol are mapped to a time-domain orthogonal frequency-division multiplexing (OFDM) symbol 14 with a cyclic prefix (CP).

The fronthaul communication interface between the baseband unit and the radio unit is often ethernet-switched or IP-routed based, where IP is short for Internet Protocol. One example is the evolved common public radio interface (eCPRI). The eCPRI interface facilitates the use of a lower layer split architecture where parts of the layer 1 baseband functionality are placed in the radio unit in order to reduce fronthaul bitrate requirements and ensuring that fronthaul bit rates scale with the air interface traffic. Different lower layer split choices exist but the resource element mapping functionality is typically put in the radio unit, meaning that frequency-domain data is transferred from the baseband unit to the radio unit. Hence, the radio unit has access to the time-frequency resource grid and can manipulate individual subcarriers, e.g. perform precoding to map different layers to the antenna ports (or radio branches).

This means that the radio unit could in principle scale the power of different subcarriers differently, i.e., use different PSD for different subcarriers. However, the radio unit has very limited knowledge of the frequency-domain content and does not know how to prioritize different subcarriers in terms of power. Consequently, all subcarriers of all carriers are typically treated with equal priority, e.g., all channels/signals are scaled equally by the radio.

With radio power scaling, the radio unit blindly reduces the power of all transmitted signals/channel of a carrier. Hence, with radio power scaling, it cannot be guaranteed that the experienced PSD meets the configured target. While this is typically not critical for best effort type of data traffic (e.g., as carried on the PDSCH), it can be problematic for control channels and for cell dimensioning signals, such as the SSB, and other prioritized signals. For example, a too low quality of the SSB (arising because of radio power downscaling of the PSD) may have a negative impact on the coverage of the corresponding cell. Furthermore, as the baseband unit is unaware of how or even if the radio unit scales the PSD, the quality of the SSB becomes non-controllable, or at least non-predictable, from a baseband perspective. In turn, this can have a negative impact on functions such as mobility and traffic handling.

Hence, one shortcoming of radio power scaling is that there is no guarantee that the cell coverage is unchanged. Another shortcoming is that signals associated with low latency and reliable communications services need to be overprovisioned in terms of bandwidth and/or power for these signals to be able to reliably be received in the event the radio unit decides to scale down the signal power.

Hence, there is still a need for an improved handling of prioritized signals where radio power overbooking is used.

US 2022/095160 A1 discloses signalling mechanisms on the front-haul between a baseband unit and a radio unit to indicate repetition of high-priority data sections so that a radio unit can optimise control-plane and reference-signal processing.

## SUMMARY

An object of embodiments herein is to address the above issues by providing techniques for performing radio power scaling of a signal that has an information content composed at least of a low-priority part and a high-priority part According to a first aspect there is presented a method for radio power scaling of a signal as defined by appended claim 1.

According to a second aspect there is presented a method for radio power scaling of a signal performed by a radio unit as defined by appended claim 12.

According to a third aspect there is presented a radio unit for radio power scaling of a signal as defined by appended claim 13.

According to a fourth aspect there is presented a computer program for radio power scaling of a signal as defined by appended claim 14.

Further aspects of the invention are presented according to the appended dependent claims 2-11, 15.

Advantageously, these aspects provide efficient handling of prioritized signals where radio power scaling is used without suffering from the above identified issues.

Advantageously, these aspects ensure that radio power scaling can be used without negatively impacting essential network information, such as cell defining signals, or other types of signals carrying prioritized communication services.

Advantageously, these aspects therefore guarantee that essential signals/channels to keep a fixed PSD, which means that radio power scaling can be used without jeopardizing the coverage of these signals/channels.

Advantageously, these aspects make prioritized signals resilient against radio power scaling, without impacting baseband processing.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic illustration of an example time-frequency resource grid;

Fig. 2 is a schematic illustration of radio power overbooking according to an example;

Fig. 3 is a schematic illustration of radio power overbooking according to embodiments;

Fig. 4 is a flowchart of a method according to embodiments;

Fig. 5 is a schematic illustration of separate application of power scaling and radio power overbooking according to embodiments;

Fig. 6 is a schematic illustration of joint application of power scaling and radio power overbooking according to embodiments;

Fig. 7 is a schematic illustration of separate application of power scaling and radio power overbooking according to embodiments;

Fig. 8 is a flowcharts of a method according to an embodiments;

Fig. 9 is a schematic diagram showing functional units of a baseband unit according to an embodiment;

Fig. 10 is a schematic diagram showing functional modules of a baseband unit according to an embodiment;

Fig. 11 is a schematic diagram showing functional units of a radio unit according to an embodiment;

Fig. 12 is a schematic diagram showing functional modules of a radio unit according to an embodiment; and

Fig. 13 shows one example of a computer program product comprising computer readable means according to an embodiment.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

As disclosed above, there is still a need for an improved handling of prioritized signals where radio power overbooking is used.

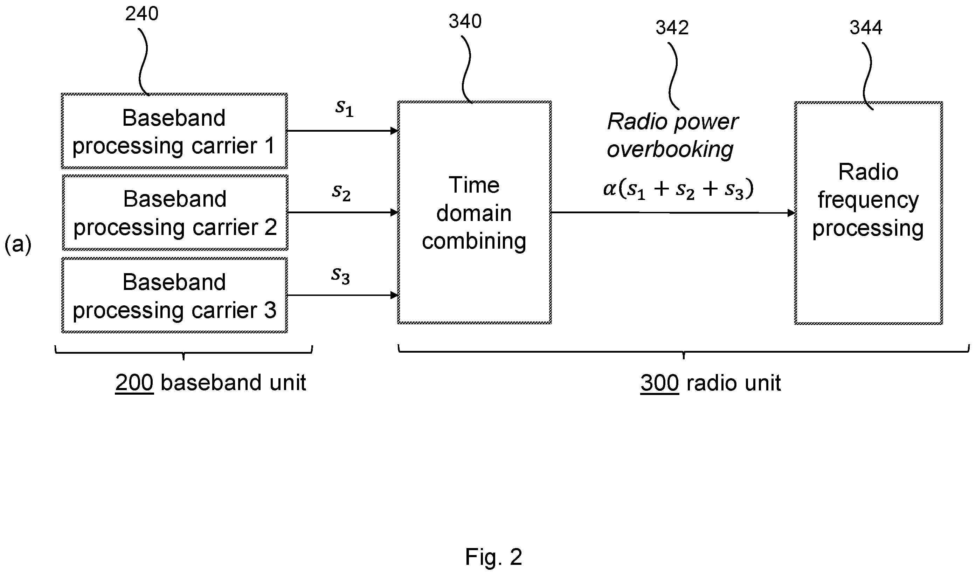

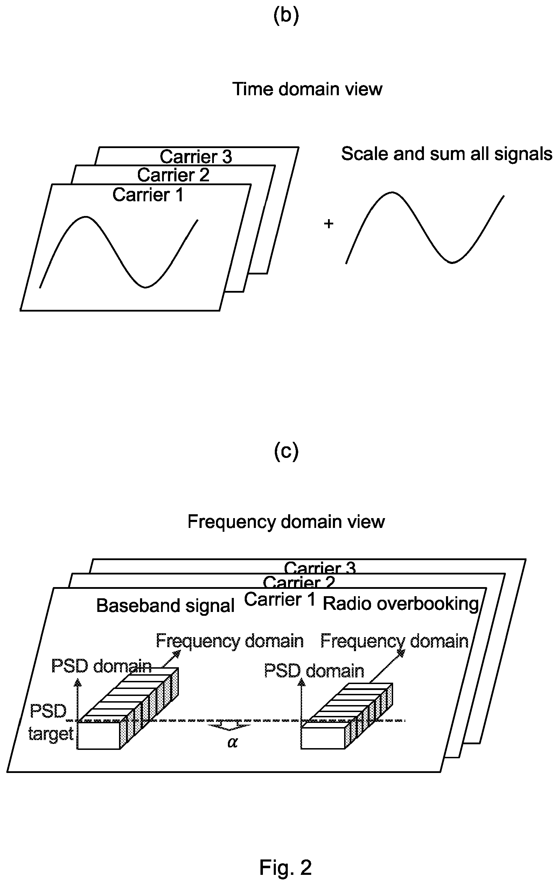

In further detail, traditionally, the carrier signals at baseband are conveyed to the radio unit, where the signals can have either time- or frequency-domain representations. The radio unit will then combine all the signals in the time-domain and ensure that the transmit power of the summed signal does not exceed the maximum power capability of the radio unit. This is illustrated in Figs. 2(a) and 2(b), where the multiplication with the scale factor $\alpha$ represents radio power scaling. In Fig. 2(a) is illustrated an example where signals $s_1$, $s_2$, $s_3$, each one from a respective carrier (as provided by a respective baseband processing carrier 240), are fed from a baseband unit 200 to a radio unit 300, and where the radio unit, after time domain combining 340 but before radio frequency processing 344, performs subsequent radio power scaling 342 on the summed signal $s_1 + s_2 + s_3$. In Fig. 2(b) is illustrated a time-domain view and in Fig. 2(c) is illustrated a frequency-domain view of the radio power scaling as performed by the radio unit where all frequency components of all carriers are scaled equally.

According to at least some of the herein disclosed embodiments, at least one of the carriers of the baseband carrier signals as conveyed from the baseband unit to the radio unit has a frequency-domain representation. A frequency-domain representation generally means that the radio unit has access to the time-frequency resource grid defined by OFDM subcarriers in the frequency domain and OFDM symbols in the time domain. Alternatively phrased, the radio unit is provided with frequency-domain signals which are transmitted on different subcarriers in different OFDM symbols. The radio unit performs OFDM modulation to generate time-domain signals. This implies that the radio unit is enabled to apply radio power scaling to individual subcarriers (with potentially subcarrier dependent scale factors).

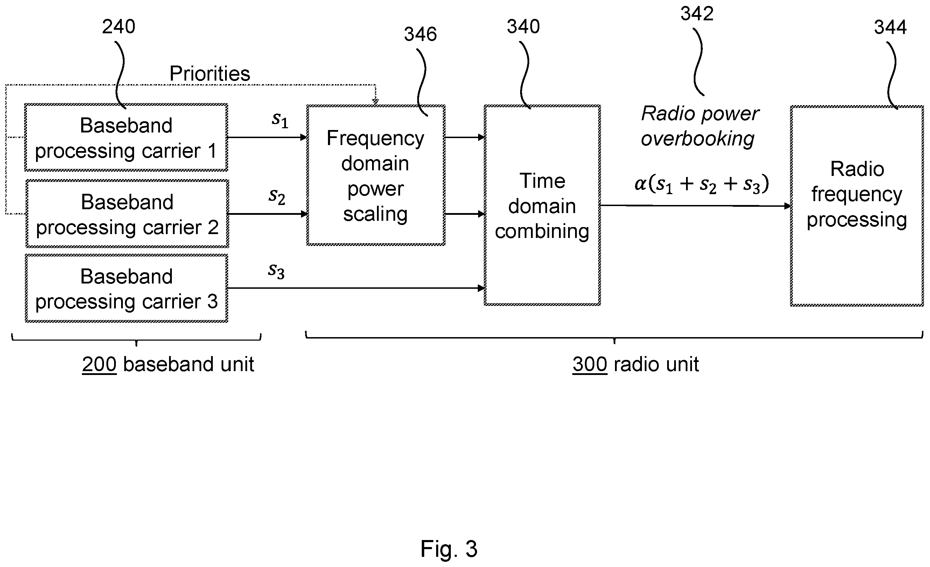

Furthermore, priorities are associated with the information content of the carriers, where high priority means that the information should not be subject to power scaling and low priority means that the information can be power scaled (down relative to a nominal power). In some examples, subcarriers associated with different priorities are power scaled differently in order to ensure that the PSD of high priority information is unaffected by radio power scaling. This is illustrated in **Fig. 3.** The signals $s_1$, $s_2$ on the left-hand side (i.e., before frequency domain power scaling 346) are in the frequency domain (i.e., before application of a Fast Fourier Transfer (FFT)) whereas the signals $s_1$, $s_2$ on the right-hand side (i.e., after time domain combining 340) are in the time domain. The signal $s_3$ is in the time domain (i.e., after application of an FFT). For the signals $s_1$, $s_2$, FFT is performed after the frequency domain power scaling 346. The signals $s_1$, $s_2$ might be provided from the baseband unit 200 to the radio unit 300 over the C2 interface whereas the signal $s_3$ might be provided from the baseband unit to the radio unit over the C1 interface. Not the entire signals $s_1$, $s_2$ will be power scaled if only parts of these signals have high priority, etc. But for the signal $s_3$ either the whole signal is power scaled or not power scaled at all during the radio power overbooking.

The embodiments disclosed herein in particular relate to techniques for radio power scaling of a signal. In order to obtain such techniques there is provided a baseband unit 200, a method performed by the baseband unit 200, a computer program product comprising code, for example in the form of a computer program, that when run on processing circuitry of the baseband unit 200, causes the baseband unit 200 to perform the method. In order to obtain such techniques there is further provided a radio unit 300, a method performed by the radio unit 300, and a computer program product comprising code, for example in the form of a computer program, that when run on processing circuitry of the radio unit 300, causes the radio unit 300 to perform the method.

At least some of the herein disclosed embodiments are based on informing the radio unit about the priority of different (carrier signals and) subcarriers, where the radio unit uses this information to perform radio power scaling of the (carrier and) subcarriers signals such that the total power of the radio is not exceeded and such that the PSD of high priority signals is unaffected by the radio power scaling.

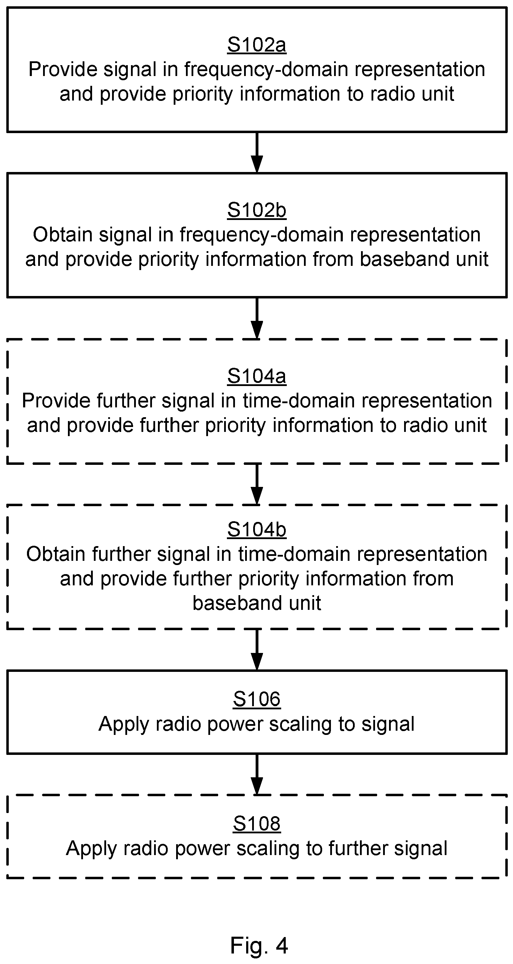

Reference is now made to **Fig. 4** illustrating a method for radio power scaling of a signal according to an embodiment.

The radio unit needs to be informed about the priority of the different signals or subcarriers that are being scheduled. As will be further disclosed in detail below, this action can be performed semi-statically or dynamically.

S102a: The baseband unit 200 provides to the radio unit 300, a signal in a frequency-domain representation and priority information of the signal. The signal has an information content composed at least of a low-priority part and a high-priority part. The priority information specifies which parts of the signal are associated with which priorities.

S102b: The radio unit 300 obtains the signal and the priority information of the signal.

Accordingly, one or more baseband carrier signals, such as $s_1$, $s_2$ of Fig. 3, are fed by a baseband unit 200 to a radio unit 300, where (at least one of) the carrier signals has a frequency-domain representation (with signals/symbols to be transmitted on OFDM subcarriers in OFMD symbols). In some examples, the signal is from the baseband unit 200 to the radio unit 300 provided over a C2 interface. It is here noted that two or more baseband units 200 might share the same radio unit 300. Hence, one and the same radio unit 300 might obtain signals and priority information from more than one baseband unit 200, depending on the network deployment and architecture.

In some examples, the signal is to be transmitted in symbols on subcarriers, where each of the low-priority part and the high-priority part are associated with different subcarriers and OFDM symbols. Priorities are assigned to the information content of the (carriers and) subcarrier signals, where, e.g., high priority means that the signals should not be power scaled and low priority means that the signals can be power scaled.

The radio unit will scale the power of different signals or subcarriers to ensure that the maximum power capability of the radio unit is not exceeded, and that the PSD of high-priority signals or subcarriers (and thus the information content of the high-priority signals or subcarriers) are unaffected. Different ways of how this can be achieved will be disclosed below.

S106: The radio unit 300 applies radio power scaling to the signal in accordance with the priority information and in conjunction with transforming the signal to a time-domain representation. Per time unit in the time-domain representation, the low-priority part is allocated a lower power spectral density than the high-priority part.

Accordingly, the (carrier signals or) subcarriers associated with different priorities are power scaled differently in order to ensure that the PSD of high-priority signals is unaffected by the radio power scaling and that the maximum power capability of the radio unit is not exceeded. Different examples of how to perform the actual radio power scaling will be disclosed below, for example, depending on whether radio power scaling is performed in a joint step or in two (or more) separate steps, where pre-scaling of frequency-domain data is performed separately from radio power scaling.

Embodiments relating to further details of radio power scaling of a signal will now be disclosed.

There might be different reasons for the radio unit 300 to perform the radio power scaling. In some examples, the radio unit 300 is configured for radio power overbooking, where the radio power scaling is performed when the radio power overbooking is active in the radio unit 300. Hence, radio power scaling can be performed to meet a power budget of the radio unit. However, there could be other effects in the radio unit 300 than radio power overbooking that can force the radio unit 300 to apply radio power scaling, for example over-heating. Hence, in some examples, the radio power scaling is performed in response to a temperature indication from the radio unit 300 to prevent overheating of the radio unit 300.

Aspects of the priority information will be disclosed next.

In general terms, the radio unit needs to be informed about the priorities of different signals or subcarriers that are being scheduled, and this can be done in different ways, as will be disclosed next.

The baseband unit 200 might provide the necessary information to the radio unit dynamically. For example, whenever a prioritized signal that should keep its PSD is scheduled, the baseband unit 200 could inform the radio unit 300 about the time-frequency content that should be unaffected by radio power scaling. Hence, in some embodiments, the priority information is provided to the radio unit 300 in conjunction with the signal being scheduled.

The priority information could be provided as a bitmap of the relevant time-frequency grid of each carrier (e.g., covering a slot), where prioritized resources are set to 1. In particular, in some embodiments, the signal is to be transmitted according to time-frequency resources allocated to a time-frequency grid, where the priority information comprises a bitmap, and where the bitmap identifies which of the time-frequency resources that belong to the low-priority part and which of the time-frequency resources that belong to the high-priority part.

Resources could, for example, be measured in subcarriers, physical resource blocks (PRB) or Hz. Another alternative is to indicate the start and end frequency positions (measured in e.g., subcarrier, PRB or Hz) for each symbol containing prioritized information. Hence, in some embodiments, the priority information indicates a start frequency position and an end frequency position for the high-priority part.

To reduce the information flow between the baseband unit 200 and the radio unit 300, a semi-static configuration could be used, where the baseband unit 200 might provide the necessary information to the radio unit seldomly, typically once at setup or at carrier re-configuration. Hence, in some embodiments, the priority information is provided to the radio unit 300 upon carrier set-up or carrier reconfiguration.

Prioritized signals that should keep their PSDs could be given time and frequency stamps indicating which resources that should be unaffected by radio power scaling. Hence, in some embodiments, the priority information comprises a time-frequency stamp indicating time-frequency resources corresponding to the high-priority part. The radio unit 300 can then be configured with these time-frequency stamps. A time-frequency stamp could contain the start time and frequency and the end time and frequency of the prioritized signal relative to a given time period.

As a non-limiting illustrative example, assume that the SSB is a prioritized resource of a signal carrier in a typical mid-band NR SSB configuration that requires 7.2 MHz in four consecutive symbols every 20 ms. Hence, the time part of the time-frequency stamp could indicate which four symbols within the repeating 20 ms time period that contains prioritized resources, and the frequency part of the time-frequency timestamp could indicate which PRBs or subcarriers that contain prioritized resources (SSB in this example).

A mixture of semi-static and dynamic provision of the priority information from the baseband unit 200 to the radio unit 300 could also be envisioned, where, for example, periodic signals (e.g., SSB) are statically configured, whereas aperiodic signals (e.g., channel state information reference signals, CSI-RS) use dynamic signaling.

In some aspects, a set of bitmaps (or information that allows the radio unit 300 to determine a set of subcarriers to be scaled) is configured, and then an index to one of the configured bitmaps is conveyed from the baseband unit 200 to the radio unit 300 to indicate which bitmap to be used in a given slot. In particular, in some embodiments, the priority information comprises an index to a configuration in a set of configurations. Each configuration could here be a respective bitmap.

In some aspects, the provision of the priority information is combined with signaling of precoders for a set of subcarriers. This can be beneficial in cases where the radio unit 300 is able to apply precoding selectively, for example to the SSB. Hence, in some embodiments, the priority information is provided as precoder information for a set of subcarriers on which the signal is to be transmitted. Further, in some examples, the time-frequency stamps for the priority information are signalled jointly with the corresponding time-frequency stamps for the precoding information. The is beneficial because it will allow reduction of signalling.

Aspects of performing the radio power scaling will be disclosed next.

In some aspects, initial radio power scaling is applied before traditional radio power scaling. Hence, in some embodiments, applying the radio power scaling to the signal comprises first pre-scaling the signal in the frequency-domain representation, then transforming the signal as pre-scaled to the time-domain representation, and then further radio power scaling the signal in the time-domain representation. The initial radio power scaling essentially rescales the PSD of signals such that the PSD of prioritized signals after the traditional radio power scaling remains unchanged. This means that the initial radio power scaling essentially scales prioritized signals by mirroring and inverting the traditional radio power scaling, while other resources are scaled to ensure that the total used power remains unchanged. In some examples, pre-scaling the signal comprises up-scaling the high-priority part and down-scaling the low-priority part. The initial radio power scaling operates on frequency-domain data, whereas the traditional radio power scaling could operate on either frequency-domain data or time-domain data. Further aspects of this will be disclosed below. As will be disclosed next, the initial radio power scaling can be performed in different ways.

According to a first non-limiting illustrative example, consider a multi-carrier setup, where each carrier is equal and contains prioritized SSB resources and non-prioritized PDSCH resources. The fraction of PRBs allocated to SSB relative to the total number of available PRBs is denoted $\alpha$ (not to be confused with the scale factor $\alpha$ used above). Assume also that all PRBs have the same PSD and that the total number of scheduled PRBs equals the total number of available PRBs. Radio power scaling is configured, where $P_c$ and $P_{tot}$ denote the total configured power over all carriers and the total available power in the radio unit, respectively (where $P_c > P_{tot}$). Hence, the total power over all carriers needs to be reduced by a factor $x = P_c/P_{tot}$ to comply with the maximum power capability of the radio unit. Assume that all carriers are scaled equally by a factor $1/x'$, where $x' = x$ when the radio power scaling is applied. Given these assumptions, a power scale factor $y$ can be determined as follows for PDSCH PRBs that ensures compliance with the maximum power $P_{tot}$ of the radio unit 300 whilst keeping the PSD of the SSB unchanged after radio power scaling by a factor $1/x'$:

$$\overbrace{\alpha x' P_c}^{\text{SSB power}} + \overbrace{\gamma(1-\alpha)P_c}^{\text{PDSCH power}} \leq \overbrace{x' P_{tot}}^{\text{Total power before overbooking scaling}}$$

$$\gamma \leq \frac{x'}{1-\alpha}\left(\frac{1}{x}-\alpha\right) = [x' = x] = \frac{1-\alpha x}{1-\alpha}$$

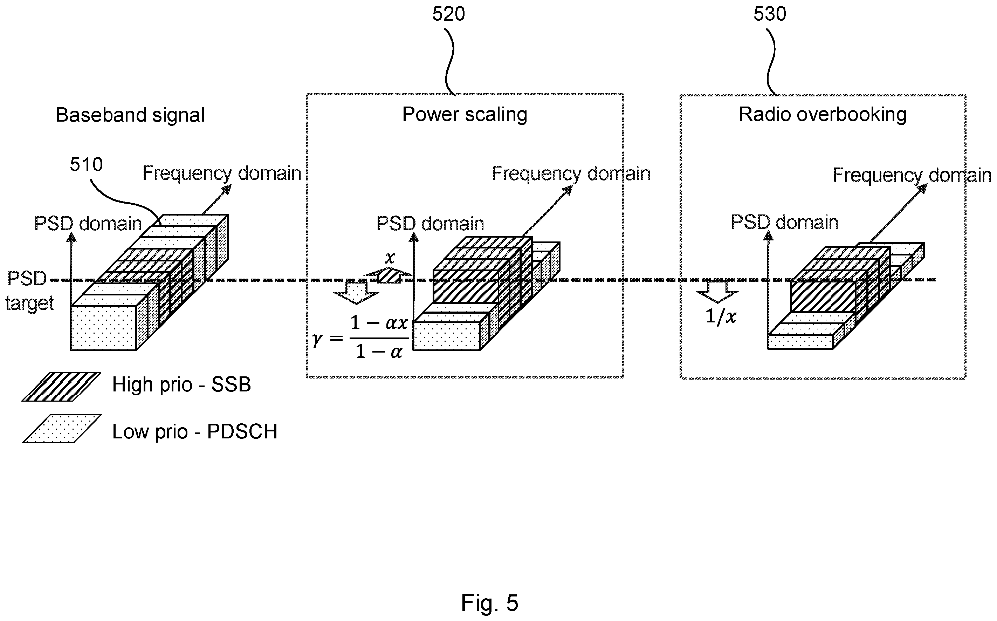

Hence, SSB PRBs are scaled (up) with $x'$ and other PRBs are scaled (down) with $\gamma$ before the radio power scaling that scales (down) all resource with a factor $1/x'$. That is, in some embodiments, the high-priority part is scaled a factor $x'$, wherein the low-priority part is scaled a factor $\gamma$, and wherein during the further radio power scaling the signal is scaled a factor $1/x'$. In **Fig. 5** is illustrated that power scaling 520 and radio power overbooking 530 are separately applied to a baseband carrier signal 510. The scale factor for the radio power overbooking power is $1/x'$ with $x' = x$. One advantage of this example is that legacy implementations of radio power overbooking can be used.

In some variants, the priority information is taken directly into consideration during application of the radio power scaling. That is, a joint power scaling of carrier resources is performed such that the total power over all carriers is below the maximum capability of the radio unit and such that the PSD of prioritized signals are unaffected.

According to a second non-limiting illustrative example, consider the variant where joint power scaling is performed. This corresponds to using $x' = 1$ in the equations above. For example, SSB PRBs can be kept unchanged (i.e., are not subjected to power scaling) whereas other PRBs are scaled (down) by a factor $\gamma$ determined as:

$$\gamma \leq \frac{1}{1-\alpha}\left(\frac{1}{x}-\alpha\right)$$

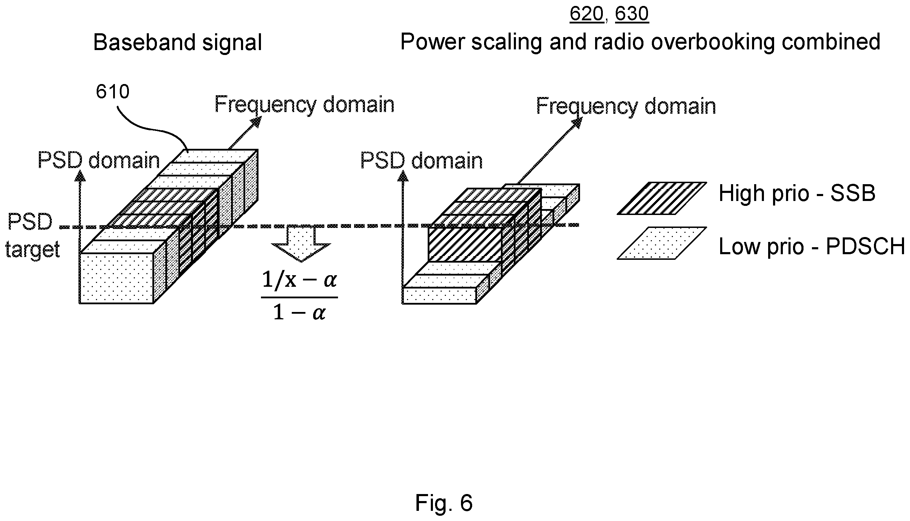

In **Fig. 6** is illustrated that power scaling 620 and radio power overbooking 630 are combined and jointly applied to a baseband carrier signal 610. One advantage of this example is that only one functional part is needed for the joint application of power scaling and radio power overbooking.

In some examples the carriers are of different data types, that is, a mixture of frequency- and time-domain representations. This could, for example, be the case when some of the carriers are conveyed over a C1 interface and some of the carriers are conveyed over a C2 interface. In this case, using different priorities for different frequency parts of carriers using a time-domain representation is not straightforwardly possible. Hence, these carriers typically need to be either fully prioritized, meaning no radio power scaling, or fully non-prioritized, meaning that radio power scaling of all frequency content will be used. A time-domain signal could, for example, be a signal used in a Global System for Mobile communication (GSM) or a signal used in a Wideband Code Division Multiple Access (WCDMA) communication system, or a C1 based LTE or NR carrier. Carriers using a frequency-domain representation can still use different priorities for different frequency parts.

According to a third non-limiting illustrative example, consider a setup with two carriers, denoted carrier 1 and carrier 2, respectively. Assume that carrier 1 has a time-domain representation and carrier 2 has a frequency-domain representation. Similar as in the first example, carrier 2 contains prioritized SSB resources and non-prioritized PDSCH resources and the fraction of PRBs allocated to SSB relative to the total number of available PRBs is denoted $\alpha$. Assume also that all PRBs for carrier 2 have the same PSD and that the total number of scheduled PRBs equals the total number of available PRBs. Radio power scaling is configured, where $P_k$ and $P$ denote the configured power for carrier $k$ and the total available power in the radio unit, respectively (where $P_1 + P_2 > P$). Given these assumptions, a power scale factor $\gamma$ can be determined as follows that ensures compliance with the maximum power $P$ of the radio unit whilst keeping the PSD of prioritized signals unchanged after radio power scaling by a factor $1/x'$:

$$\overbrace{qP_1}^{\text{C1 power}} + \overbrace{\alpha x' P_2}^{\text{SSB power C2}} + \overbrace{\gamma(1-\alpha)P_2}^{\text{PDSCH power C2}} \leq \overbrace{x' P}^{\text{Total power before overbooking scaling}}$$

where $q$ is a parameter that can be set as described next.

Assuming that carrier 1 is prioritized, meaning that carrier 1 should not be power scaled. This is represented by $q = x'$, and where the power of carrier 1 and the power of SSB PRBs of carrier 2 are scaled by $x'$ and the remaining PRBs of carrier 2 are scaled by a factor $\gamma$ determined as:

$$\gamma \leq \frac{x'}{(1-\alpha)P_2}(P - \alpha P_2 - P_1)$$

Assuming instead that carrier 1 is non-prioritized, meaning that carrier 1 should be power scaled. This is represented by $q = \gamma$, and where the power of SSB PRBs of carrier 2 are scaled by $x'$ and the remaining PRBs of carrier 2 and the power of carrier 1 are scaled by a factor $\gamma$ determined as:

$$\gamma \leq \frac{x'(P - \alpha P_2)}{P_1 + (1-\alpha)P_2}$$

In particular, in some embodiments, the method comprises (optional) steps S104a, S104b, and S108.

S104a: The baseband unit 200 provides to the radio unit 300 a further signal in a time-domain representation and priority information of the further signal. The priority information of the further signal specifies if the further signal is low-priority or high-priority.

S104b: The radio unit 300 obtains the further signal and the priority information of the further signal.

S108: The radio unit 300 applies radio power scaling also to the further signal in accordance with the priority information of the further signal. When the further signal is low-priority, the further signal is allocated lower transmission power than when the further signal is high-priority.

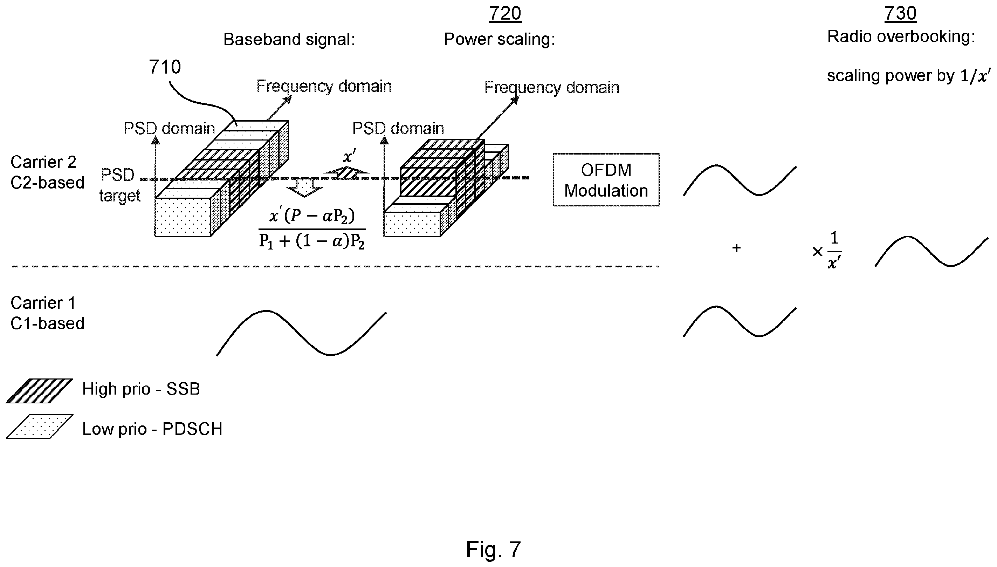

If traditional radio power scaling is applied as a separate second step, then $x' = (P_1 + P_2)/P$, otherwise $x' = 1$. In **Fig. 7** is illustrated that power scaling 720 and radio power overbooking 730 are separately applied to a baseband carrier signal 710. Carrier 1 is non-prioritized and has a time-domain representation whereas carrier 2 has a frequency-domain representation.

There may be different examples of information represented by the high-priority part and the low-priority part, respectively. In some non-limiting examples, the high-priority part represents reference signal resources (such as reference signal resources used for mobility measurements or other type of reference signal resources used for other purposes) or control signal resources, and wherein the low-priority part represents user data signal resources

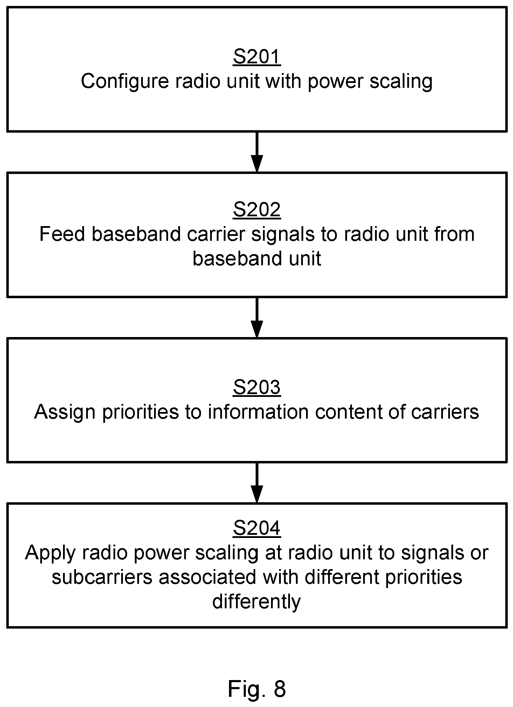

One particular embodiment for radio power scaling of a signal based on at least some of the above disclosed embodiments will now be disclosed in detail with reference to the flowchart of **Fig. 8.**

S201: The radio unit is configured with radio power scaling.

S202: The baseband unit feeds baseband carrier signals to the radio unit, where at least one of the signals has a frequency-domain representation.

S203: Priorities are assigned to the information content of the carriers. For example, high priority means that the information should not be power scaled and low priority means that the information can be power scaled. This priority information is provided from the baseband unit to the radio unit. The radio unit can be semi-statically provided with the priority information and/or the priority information can be provided dynamically from the baseband units to the radio unit.

S204: The radio unit applies radio power scaling to the signals or subcarriers associated with the different priorities differently in order to ensure that the PSD of high priority information is unaffected by the radio power scaling according to any of the above aspects, examples, and embodiments.

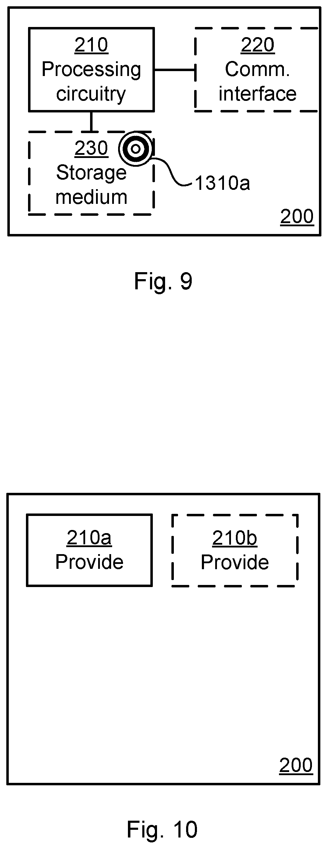

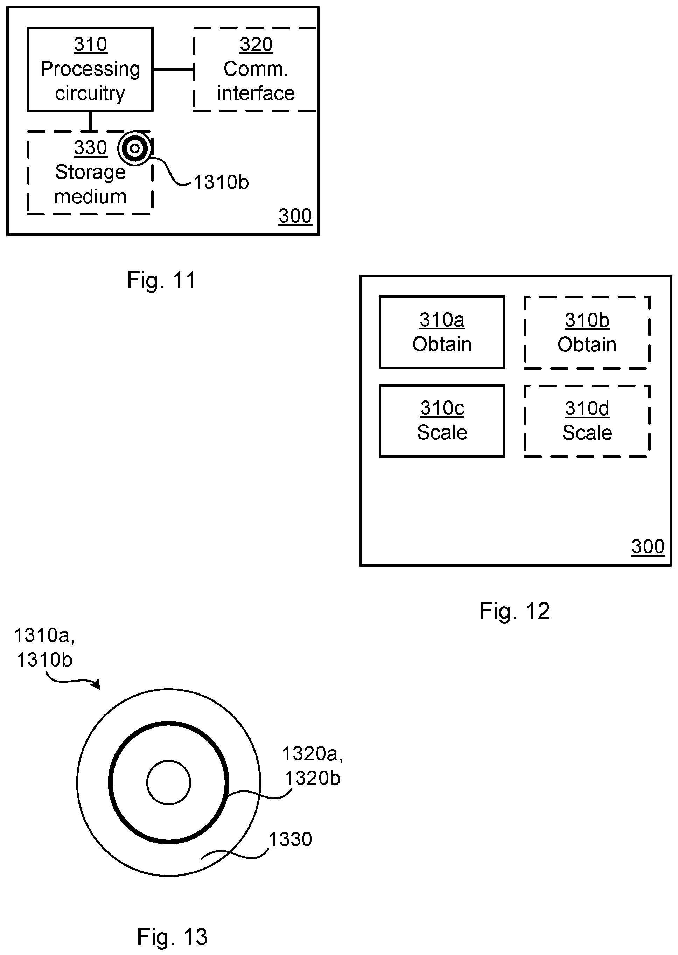

**Fig. 9** schematically illustrates, in terms of a number of functional units, the components of a baseband unit 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1310a (as in Fig. 13), e.g. in the form of a storage medium 230. The processing circuitry 210 may further be provided as at least one application specific integrated circuit (ASIC), or field programmable gate array (FPGA).

Particularly, the processing circuitry 210 is configured to cause the baseband unit 200 to perform a set of operations, or steps, as disclosed above. For example, the storage medium 230 may store the set of operations, and the processing circuitry 210 may be configured to retrieve the set of operations from the storage medium 230 to cause the baseband unit 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The baseband unit 200 may further comprise a communications interface 220 for communications with other entities, functions, nodes, and devices, as illustrated in Fig. 3. As such the communications interface 220 may comprise one or more transmitters and receivers, comprising analogue and digital components.

The processing circuitry 210 controls the general operation of the baseband unit 200 e.g. by sending data and control signals to the communications interface 220 and the storage medium 230, by receiving data and reports from the communications interface 220, and by retrieving data and instructions from the storage medium 230. Other components, as well as the related functionality, of the baseband unit 200 are omitted in order not to obscure the concepts presented herein.

**Fig. 10** schematically illustrates, in terms of a number of functional modules, the components of a baseband unit 200 according to an embodiment. The baseband unit 200 of Fig. 10 comprises a provide module 210a configured to perform step S102a. The baseband unit 200 of Fig. 10 may further comprise a number of optional functional modules, such as a provide module 210b configured to perform step S104a. In general terms, each functional module 210a:210b may be implemented in hardware or in software. Preferably, one or more or all functional modules 210a:210b may be implemented by the processing circuitry 210, possibly in cooperation with the communications interface 220 and/or the storage medium 230. The processing circuitry 210 may thus be arranged to from the storage medium 230 fetch instructions as provided by a functional module 210a:210b and to execute these instructions, thereby performing any steps of the baseband unit 200 as disclosed herein.

**Fig. 11** schematically illustrates, in terms of a number of functional units, the components of a radio unit 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1310b (as in Fig. 13), e.g. in the form of a storage medium 330. The processing circuitry 310 may further be provided as at least one application specific integrated circuit (ASIC), or field programmable gate array (FPGA).

Particularly, the processing circuitry 310 is configured to cause the radio unit 300 to perform a set of operations, or steps, as disclosed above. For example, the storage medium 330 may store the set of operations, and the processing circuitry 310 may be configured to retrieve the set of operations from the storage medium 330 to cause the radio unit 300 to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The radio unit 300 may further comprise a communications interface 320 for communications with other entities, functions, nodes, and devices, as illustrated in Fig. 3. As such the communications interface 320 may comprise one or more transmitters and receivers, comprising analogue and digital components.

The processing circuitry 310 controls the general operation of the radio unit 300 e.g. by sending data and control signals to the communications interface 320 and the storage medium 330, by receiving data and reports from the communications interface 320, and by retrieving data and instructions from the storage medium 330. Other components, as well as the related functionality, of the radio unit 300 are omitted in order not to obscure the concepts presented herein.

**Fig. 12** schematically illustrates, in terms of a number of functional modules, the components of a radio unit 300 according to an embodiment. The radio unit 300 of Fig. 12 comprises a number of functional modules; an obtain module 310a configured to perform step S102b, and a scale module 310c configured to perform step S106. The radio unit 300 of Fig. 12 may further comprise a number of optional functional modules, such as any of an obtain module 310b configured to perform step S104b and a scale module 310d configured to perform step S108. In general terms, each functional module 310a:310d may be implemented in hardware or in software. Preferably, one or more or all functional modules 310a:310d may be implemented by the processing circuitry 310, possibly in cooperation with the communications interface 320 and/or the storage medium 330. The processing circuitry 310 may thus be arranged to from the storage medium 330 fetch instructions as provided by a functional module 310a:310d and to execute these instructions, thereby performing any steps of the radio unit 300 as disclosed herein.

**Fig. 13** shows one example of a computer program product 1310a, 1310b comprising computer readable means 1330. On this computer readable means 1330, a computer program 1320a can be stored, which computer program 1320a can cause the processing circuitry 210 and thereto operatively coupled entities and devices, such as the communications interface 220 and the storage medium 230, to execute methods according to embodiments described herein. The computer program 1320a and/or computer program product 1310a may thus provide means for performing any steps of the baseband unit 200 as herein disclosed. On this computer readable means 1330, a computer program 1320b can be stored, which computer program 1320b can cause the processing circuitry 310 and thereto operatively coupled entities and devices, such as the communications interface 320 and the storage medium 330, to execute methods according to embodiments described herein. The computer program 1320b and/or computer program product 1310b may thus provide means for performing any steps of the radio unit 300 as herein disclosed.

In the example of Fig. 13, the computer program product 1310a, 1310b is illustrated as an optical disc, such as a CD (compact disc) or a DVD (digital versatile disc) or a Blu-Ray disc. The computer program product 1310a, 1310b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1320a, 1320b is here schematically shown as a track on the depicted optical disk, the computer program 1320a, 1320b can be stored in any way which is suitable for the computer program product 1310a, 1310b.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for radio power scaling of a signal, wherein the method comprises:

    providing (S102a, S102b), from a baseband unit (200) to a radio unit (300), a signal in a frequency-domain representation and priority information of the signal, wherein the signal has an information content composed at least of a low-priority part and a high-priority part, and wherein the priority information specifies which parts of the signal are associated with which priorities; and
    said method **characterised by** applying (S106), by the radio unit (300), radio power scaling to the signal in accordance with the priority information and in conjunction with transforming the signal to a time-domain representation, wherein, per time unit in the time-domain representation, the low-priority part is allocated a lower power spectral density than the high-priority part.

2. The method according to claim 1, wherein the signal is to be transmitted in symbols on subcarriers, and wherein each of the low-priority part and the high-priority part are associated with different subcarriers and orthogonal frequency-division multiplexing, OFDM, symbols.

3. The method according to claim 1 or 2, wherein the priority information is provided to the radio unit (300) in conjunction with the signal being scheduled.

4. The method according to any preceding claim, wherein the signal is to be transmitted according to time-frequency resources allocated to a time-frequency grid, wherein the priority information comprises a bitmap, and wherein the bitmap identifies which of the time-frequency resources that belong to the low-priority part and which of the time-frequency resources that belong to the high-priority part.

5. The method according to any of claims 1 to 3, wherein the priority information comprises an index to a configuration in a set of configurations.

6. The method according to any of claims 1 to 5, wherein the priority information is provided as precoder information for a set of subcarriers on which the signal is to be transmitted.

7. The method according to any of claims 1 to 6, wherein the priority information indicates a start frequency position and an end frequency position for the high-priority part.

8. The method according to any preceding claim, wherein the method further comprises:

    providing (S104a, S104b), from the baseband unit (200) to the radio unit (300), a further signal in a time-domain representation and priority information of the further signal, wherein the priority information of the further signal specifies if the further signal is low-priority or high-priority; and
    applying (S108), by the radio unit (300), also radio power scaling to the further signal in accordance with the priority information of the further signal, wherein when the further signal is low-priority, the further signal is allocated lower transmission power than when the further signal is high-priority.

9. The method according to any preceding claim, wherein the high-priority part represents reference signal resources or control signal resources, and wherein the low-priority part represents user data signal resources.

10. The method according to any preceding claim, wherein the radio unit (300) is configured for radio power overbooking, and wherein radio power scaling is performed when the radio power overbooking is active in the radio unit (300).

11. The method according to any of claims 1 to 9, wherein the radio power scaling is performed in response to a temperature indication of the radio unit (300).

12. A method for radio power scaling of a signal, wherein the method is performed by a radio unit (300), and wherein the method comprises:

obtaining (S102b), from a baseband unit (200), a signal in a frequency-domain representation and priority information of the signal, wherein the signal has an information content composed at least of a low-priority part and a high-priority part, and wherein the priority information specifies which parts of the signal are associated with which priorities; and
said method **characterised by** applying (S106) radio power scaling to the signal in accordance with the priority information and in conjunction with transforming the signal to a time-domain representation, wherein, per time unit in the time-domain representation, the low-priority part is allocated a lower power spectral density than the high-priority part.

13. A radio unit (300) for radio power scaling of a signal, the radio unit (300) comprising processing circuitry (310), the processing circuitry being configured to cause the radio unit (300) to:

obtain, from a baseband unit (200), a signal in a frequency-domain representation and priority information of the signal, wherein the signal has an information content composed at least of a low-priority part and a high-priority part, and wherein the priority information specifies which parts of the signal are associated with which priorities; and
said radio unit **characterised in that** the processing circuitry is further configured to cause the radio unit to apply radio power scaling to the signal in accordance with the priority information and in conjunction with transforming the signal to a time-domain representation, wherein, per time unit in the time-domain representation, the low-priority part is allocated a lower power spectral density than the high-priority part.

14. A computer program (1320b) for radio power scaling of a signal, the computer program comprising computer code which, when run on processing circuitry (310) of a radio unit (300), causes the radio unit (300) to:

obtain (S102b), from a baseband unit (200), a signal in a frequency-domain representation and priority information of the signal, wherein the signal has an information content composed at least of a low-priority part and a high-priority part, and wherein the priority information specifies which parts of the signal are associated with which priorities; and
said computer program **characterised by** further comprising computer code which, when run on processing circuitry of the radio unit, causes the radio unit to apply (S106) radio power scaling to the signal in accordance with the priority information and in conjunction with transforming the signal to a time-domain representation, wherein, per time unit in the time-domain representation, the low-priority part is allocated a lower power spectral density than the high-priority part.

15. A computer program product (1310a, 1310b) comprising a computer program (1320a, 1320b) according to claim 14, and a computer readable storage medium (1330) on which the computer program is stored.

**Patentansprüche**

1. Verfahren zur Funkleistungsskalierung eines Signals, wobei das Verfahren Folgendes umfasst:

Bereitstellen (S102a, S102b) eines Signals in einer Frequenzdomänendarstellung und von Prioritätsinformationen des Signals von einer Basisbandeinheit (200) an eine Funkeinheit (300), wobei das Signal einen Informationsinhalt aufweist, der aus mindestens einem Teil mit niedriger Priorität und einem Teil mit hoher Priorität besteht, und wobei die Prioritätsinformationen spezifizieren, welche Teile des Signals mit welchen Prioritäten assoziiert sind; und
wobei das Verfahren **gekennzeichnet ist durch** Anwenden (S106) von Funkleistungsskalierung auf das Signal durch die Funkeinheit (300) gemäß den Prioritätsinformationen und in Verbindung mit der Umwandlung des Signals in einer Zeitdomänendarstellung, wobei dem Teil mit niedriger Priorität eine geringere Leistungsdichte pro Zeiteinheit in der Zeitdomänendarstellung zugewiesen wird als dem Teil mit hoher Priorität.

**2.** Verfahren nach Anspruch 1, wobei das Signal in Symbolen auf Unterträgern gesendet werden soll und wobei jeder von dem Teil mit niedriger Priorität und dem Teil mit hoher Priorität mit verschiedenen Unterträgern und Orthogonal Frequency-Division Multiplexing-Symbolen, OFDM-Symbolen, assoziiert ist.

**3.** Verfahren nach Anspruch 1 oder 2, wobei die Prioritätsinformationen der Funkeinheit (300) in Verbindung mit dem Signal bereitgestellt werden, das disponiert wird.

**4.** Verfahren nach einem der vorhergehenden Ansprüche, wobei das Signal gemäß Zeit-Frequenz-Ressourcen gesendet werden soll, die einem Zeit-Frequenz-Gitter zugewiesen sind, wobei die Prioritätsinformationen eine Bitmap umfassen und wobei die Bitmap identifiziert, welche der Zeit-Frequenz-Ressourcen zu dem Teil mit niedriger Priorität gehören und welche der Zeit-Frequenz-Ressourcen zu dem Teil mit hoher Priorität gehören.

**5.** Verfahren nach einem der Ansprüche 1 bis 3, wobei die Prioritätsinformationen einen Index zu einer Konfiguration in einem Satz von Konfigurationen umfassen.

**6.** Verfahren nach der Ansprüche 1 bis 5, wobei die Prioritätsinformationen als Precoder-Informationen für einen Satz von Unterträgern bereitgestellt werden, auf denen das Signal gesendet werden soll.

**7.** Verfahren nach der Ansprüche 1 bis 6, wobei die Prioritätsinformationen eine Anfangsfrequenzposition und eine Endfrequenzposition für den Teil mit hoher Priorität anzeigen.

**8.** Verfahren nach einem vorstehenden Anspruch, wobei das Verfahren ferner Folgendes umfasst:

Bereitstellen (S104a, S104b) eines weiteren Signals in einer Zeitdomänendarstellung und von Prioritätsinformationen des weiteren Signals von der Basisbandeinheit (200) an die Funkeinheit (300), wobei die Prioritätsinformationen des weiteren Signals spezifizieren, ob das weitere Signal eine niedrige Priorität oder eine hohe Priorität aufweist; und

Anwenden (S108) von Funkleistungsskalierung (300) auch auf das weitere Signal durch die Funkeinheit gemäß den Prioritätsinformationen des weiteren Signals, wobei, wenn das weitere Signal eine niedrige Priorität aufweist, dem weiteren Signal eine niedrigere Sendeleistung zugewiesen wird, als wenn das weitere Signal eine hohe Priorität aufweist.

**9.** Verfahren nach einem der vorhergehenden Ansprüche, wobei der Teil mit hoher Priorität Referenzsignalressourcen oder Steuersignalressourcen darstellt und wobei der Teil mit niedriger Priorität Benutzerdaten-Signalressourcen darstellt.

**10.** Verfahren nach einem der vorhergehenden Ansprüche, wobei die Funkeinheit (300) für Funkleistungsüberbuchung konfiguriert ist und wobei die Funkleistungsskalierung durchgeführt wird, wenn die Funkleistungsüberbuchung in der Funkeinheit (300) aktiv ist.

**11.** Verfahren nach der Ansprüche 1 bis 9, wobei die Funkleistungsskalierung in Reaktion auf eine Temperaturanzeige der Funkeinheit (300) durchgeführt wird.

**12.** Verfahren zur Funkleistungsskalierung eines Signals, wobei das Verfahren von einer Funkeinheit (300) durchgeführt wird und wobei das Verfahren Folgendes umfasst:

Erhalten (S102b) eines Signals in einer Frequenzdomänendarstellung und von Prioritätsinformationen des Signals von einer Basisbandeinheit (200), wobei das Signal einen Informationsinhalt aufweist, der aus mindestens einem Teil mit niedriger Priorität und einem Teil mit hoher Priorität besteht, und wobei die Prioritätsinformationen spezifizieren, welche Teile des Signals mit welchen Prioritäten assoziiert sind; und

wobei das Verfahren **gekennzeichnet ist durch** Anwenden (S106) von Funkleistungsskalierung auf das Signal gemäß den Prioritätsinformationen und in Verbindung mit der Umwandlung des Signals in einer Zeitdomänendarstellung, wobei dem Teil mit niedriger Priorität eine geringere Leistungsdichte pro Zeiteinheit in der Zeitdomänendarstellung zugewiesen wird als dem Teil mit hoher Priorität.

**13.** Funkeinheit (300) zur Funkleistungsskalierung eines Signals, wobei die Funkeinheit (300) Verarbeitungsschaltungsanordnung (310) umfasst, wobei die Verarbeitungsschaltungsanordnung so konfiguriert ist, dass sie die Funkeinheit (300) zu Folgendem veranlasst:

Erhalten eines Signals in einer Frequenzdomänendarstellung und von Prioritätsinformationen des Signals von einer Basisbandeinheit (200), wobei das Signal einen Informationsinhalt aufweist, der aus mindestens einem Teil mit niedriger Priorität und einem Teil mit hoher Priorität besteht, und wobei die Prioritätsinformationen spezifizieren, welche Teile des Signals mit welchen Prioritäten assoziiert sind; und

wobei das Verfahren **dadurch gekennzeichnet ist, dass** die Verarbeitungsschaltungsanordnung ferner so konfiguriert ist, dass sie die Funkeinheit veranlasst, Funkleistungsskalierung auf das Signal gemäß den Prioritätsinformationen und in Verbindung mit der Umwandlung des Signals in einer Zeitdomänendarstellung anzuwenden, wobei dem Teil mit niedriger Priorität eine geringere Leistungsdichte pro Zeiteinheit in der Zeitdomänendarstellung zugewiesen wird als dem Teil mit hoher Priorität.

14. Computerprogramm (1320b) zur Funkleistungsskalierung eines Signals, wobei das Computerprogramm Computercode umfasst, der bei Ausführung auf Verarbeitungsschaltungsanordnung (310) einer Funkeinheit (300) die Funkeinheit (300) zu Folgendem veranlasst:

Erhalten (S102b) eines Signals in einer Frequenzdomänendarstellung und von Prioritätsinformationen des Signals von einer Basisbandeinheit (200), wobei das Signal einen Informationsinhalt aufweist, der aus mindestens einem Teil mit niedriger Priorität und einem Teil mit hoher Priorität besteht, und wobei die Prioritätsinformationen spezifizieren, welche Teile des Signals mit welchen Prioritäten assoziiert sind; und

wobei das Computerprogramm **dadurch gekennzeichnet ist, dass** es ferner Computercode umfasst, der bei Ausführung auf Verarbeitungsschaltungsanordnung der Funkeinheit die Funkeinheit veranlasst, Funkleistungsskalierung auf das Signal gemäß den Prioritätsinformationen und in Verbindung mit der Umwandlung des Signals in einer Zeitdomänendarstellung anzuwenden (S106), wobei dem Teil mit niedriger Priorität eine geringere Leistungsdichte pro Zeiteinheit in der Zeitdomänendarstellung zugewiesen wird als dem Teil mit hoher Priorität.

15. Computerprogrammprodukt (1310a, 1310b), umfassend ein Computerprogramm (1320a, 1320b) nach Anspruch 14 und ein computerlesbares Speichermedium (1330), auf dem das Computerprogramm gespeichert ist.

**Revendications**

1. Procédé de mise à l'échelle de puissance radio d'un signal, dans lequel le procédé comprend :

la fourniture (S102a, S102b), d'une unité de bande de base (200) à une unité radio (300), d'un signal dans une représentation de domaine fréquentiel et d'informations de priorité du signal, dans lequel le signal présente un contenu d'informations composé au moins d'une partie de basse priorité et d'une partie de haute priorité, et dans lequel les informations de priorité spécifient quelles parties du signal sont associées à quelles priorités ; et ledit procédé étant **caractérisé par** l'application (S106), par l'unité radio (300), d'une mise à l'échelle de puissance radio au signal en fonction des informations de priorité et en conjonction avec la transformation du signal dans une représentation de domaine temporel, dans lequel, par unité de temps dans la représentation de domaine temporel, il est attribué, à la partie de basse priorité, une densité spectrale de puissance inférieure à celle de la partie de haute priorité.

2. Procédé selon la revendication 1, dans lequel le signal doit être transmis dans des symboles sur des sous-porteuses, et dans lequel la partie de basse priorité et la partie de haute priorité sont chacune associées à différentes sous-porteuses et à différents symboles de multiplexage par répartition de fréquence orthogonale, OFDM.

3. Procédé selon la revendication 1 ou 2, dans lequel les informations de priorité sont fournies à l'unité radio (300) en conjonction avec le signal étant planifié.

4. Procédé selon l'une quelconque des revendications précédentes, dans lequel le signal doit être transmis en fonction de ressources de temps-fréquences attribuées à une grille de temps-fréquences, dans lequel les informations de priorité comprennent un bitmap, et dans lequel le bitmap identifie celles des ressources de temps-fréquences qui appartiennent à la partie de basse priorité et celles des ressources de temps-fréquences qui appartiennent à la partie de haute priorité.

5. Procédé selon l'une quelconque des revendications 1 à 3, dans lequel les informations de priorité comprennent un indice pour une configuration dans un ensemble de configurations.

**6.** Procédé selon l'une quelconque des revendications 1 à 5, dans lequel les informations de priorité sont fournies en tant qu'informations de précodeur pour un ensemble de sous-porteuses sur lesquelles le signal doit être transmis.

**7.** Procédé selon l'une quelconque des revendications 1 à 6, dans lequel les informations de priorité indiquent une position de fréquence de début et une position de fréquence de fin pour la partie de haute priorité.

**8.** Procédé selon l'une quelconque des revendications précédentes, dans lequel le procédé comprend en outre :

la fourniture (S104a, S104b), de l'unité de bande de base (200) à l'unité radio (300), d'un autre signal dans une représentation de domaine temporel et d'informations de priorité de l'autre signal, dans lequel les informations de priorité de l'autre signal spécifient si l'autre signal est de basse priorité ou de haute priorité ; et
l'application (S108), par l'unité radio (300), également d'une mise à l'échelle de puissance radio à l'autre signal en fonction des informations de priorité de l'autre signal, dans lequel, lorsque l'autre signal est de basse priorité, il est attribué à l'autre signal une puissance de transmission inférieure à celle lorsque l'autre signal est de haute priorité.

**9.** Procédé selon l'une quelconque des revendications précédentes, dans lequel la partie de haute priorité représente des ressources de signal de référence ou des ressources de signal de commande, et dans lequel la partie de basse priorité représente des ressources de signal de données utilisateur.

**10.** Procédé selon l'une quelconque des revendications précédentes, dans lequel l'unité radio (300) est configurée pour une surréservation de puissance radio, et dans lequel une mise à l'échelle de puissance radio est réalisée lorsque la surréservation de puissance radio est active dans l'unité radio (300).

**11.** Procédé selon l'une quelconque des revendications 1 à 9, dans lequel la mise à l'échelle de puissance radio est réalisée en réponse à une indication de température de l'unité radio (300).

**12.** Procédé de mise à l'échelle de puissance radio d'un signal, dans lequel le procédé est réalisé par une unité radio (300), et dans lequel le procédé comprend :

l'obtention (S102b), à partir d'une unité de bande de base (200), d'un signal dans une représentation de domaine fréquentiel et d'informations de priorité du signal, dans lequel le signal présente un contenu d'informations composé au moins d'une partie de basse priorité et d'une partie de haute priorité, et dans lequel les informations de priorité spécifient quelles parties du signal sont associées à quelles priorités ; et
ledit procédé étant **caractérisé par** l'application (S106) d'une mise à l'échelle de puissance radio au signal en fonction des informations de priorité et en conjonction avec la transformation du signal dans une représentation de domaine temporel, dans lequel, par unité de temps dans la représentation de domaine temporel, il est attribué, à la partie de basse priorité, une densité spectrale de puissance inférieure à celle de la partie de haute priorité.

**13.** Unité radio (300) pour une mise à l'échelle de puissance radio d'un signal, l'unité radio (300) comprenant une circuiterie de traitement (310), la circuiterie de traitement étant configurée pour amener l'unité radio (300) à :

obtenir, à partir d'une unité de bande de base (200), un signal dans une représentation de domaine fréquentiel et des informations de priorité du signal, dans lequel le signal présente un contenu d'informations composé au moins d'une partie de basse priorité et d'une partie de haute priorité, et dans lequel les informations de priorité spécifient quelles parties du signal sont associées à quelles priorités ; et
ladite unité radio étant **caractérisée en ce que** la circuiterie de traitement est en outre configurée pour amener l'unité radio à appliquer une mise à l'échelle de puissance radio au signal en fonction des informations de priorité et en conjonction avec la transformation du signal dans une représentation de domaine temporel, dans lequel, par unité de temps dans la représentation de domaine temporel, il est attribué, à la partie de basse priorité, une densité spectrale de puissance inférieure à celle de la partie de haute priorité.

**14.** Programme informatique (1320b) pour une mise à l'échelle de puissance radio d'un signal, le programme informatique comprenant un code informatique qui, lorsqu'il est exécuté sur une circuiterie de traitement (310) d'une unité radio (300), amène l'unité radio (300) à :

obtenir (S102b), à partir d'une unité de bande de base (200), un signal dans une représentation de domaine fréquentiel et des informations de priorité du signal, dans lequel le signal présente un contenu d'informations composé au moins d'une partie de basse priorité et d'une partie de haute priorité, et dans lequel les informations de priorité spécifient quelles parties du signal sont associées à quelles priorités ; et

ledit programme informatique étant **caractérisé en ce qu'**il comprend en outre un code informatique qui, lorsqu'il est exécuté sur une circuiterie de traitement de l'unité radio, amène l'unité radio à appliquer (S106) une mise à l'échelle de puissance radio au signal en fonction des informations de priorité et en conjonction avec la transformation du signal dans une représentation de domaine temporel, dans lequel, par unité de temps dans la représentation de domaine temporel, il est attribué, à la partie de basse priorité, une densité spectrale de puissance inférieure à celle de la partie de haute priorité.

15. Produit de programme informatique (1310a, 1310b) comprenant un programme informatique (1320a, 1320b) selon la revendication 14, et un support de stockage lisible par ordinateur (1330) sur lequel le programme informatique est stocké.

Fig. 1

(a)

240 — Baseband processing carrier 1, Baseband processing carrier 2, Baseband processing carrier 3

$s_1$, $s_2$, $s_3$

340 — Time domain combining

342 — *Radio power overbooking*

$\alpha(s_1 + s_2 + s_3)$

344 — Radio frequency processing

200 baseband unit

300 radio unit

Fig. 2

EP 4 606 156 B1

(b)

Time domain view

Carrier 3
Carrier 2
Carrier 1

Scale and sum all signals

+

(c)

Frequency domain view

Carrier 3
Carrier 2
Baseband signal Carrier 1 Radio overbooking

Frequency domain     Frequency domain

PSD domain→     PSD domain

PSD target     $\alpha$

Fig. 2

240      346      340      342      344

Priorities

| Baseband processing carrier 1 | $s_1$ | Frequency domain power scaling | | Time domain combining | *Radio power overbooking* | Radio frequency processing |
| Baseband processing carrier 2 | $s_2$ | | | | $\alpha(s_1 + s_2 + s_3)$ | |
| Baseband processing carrier 3 | $s_3$ | | | | | |

<u>200</u> baseband unit

<u>300</u> radio unit

Fig. 3

**S102a**
Provide signal in frequency-domain representation and provide priority information to radio unit

**S102b**
Obtain signal in frequency-domain representation and provide priority information from baseband unit

**S104a**
Provide further signal in time-domain representation and provide further priority information to radio unit

**S104b**
Obtain further signal in time-domain representation and provide further priority information from baseband unit

**S106**
Apply radio power scaling to signal

**S108**
Apply radio power scaling to further signal

Fig. 4

Fig. 5

EP 4 606 156 B1

Baseband signal

620, 630

Power scaling and radio overbooking combined

610

$$\frac{1/x - \alpha}{1 - \alpha}$$

High prio - SSB

Low prio - PDSCH

Fig. 6

**720**
Baseband signal:  Power scaling:

**730**
Radio overbooking:

scaling power by $1/x'$

710

Frequency domain   Frequency domain

PSD domain   PSD domain

Carrier 2
C2-based

PSD target

$$\frac{x'(P - \alpha P_2)}{P_1 + (1 - \alpha)P_2}$$

$x'$

OFDM Modulation

$+$   $\times \frac{1}{x'}$

Carrier 1
C1-based

///// High prio - SSB

///// Low prio - PDSCH

Fig. 7

EP 4 606 156 B1

S201
Configure radio unit with power scaling

S202
Feed baseband carrier signals to radio unit from baseband unit

S203
Assign priorities to information content of carriers

S204
Apply radio power scaling at radio unit to signals or subcarriers associated with different priorities differently

Fig. 8

Fig. 9

Fig. 10

Fig. 11

Fig. 12

Fig. 13

**EP 4 606 156 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2022095160 A1